# EUROPEAN PATENT APPLICATION

(11) **EP 1 672 566 A1**
(43) Date of publication of application: **21.06.2006**
(21) Application number: 05019465.3
(22) Date of filing: 07.09.2005
(51) Int. Cl.: G06K 19/073, G06F 12/14, G07F 7/10

(54) **Portable electronic apparatus**

(30) Priority: 14.12.2004 JP 2004361818
(71) Applicant: KABUSHIKI KAISHA TOSHIBA, Tokyo 105-8001 (JP)
(72) Inventor: Takeda, Hajime, Minato-ku, Tokyo 105-8001 (JP)
(74) Representative: Kramer - Barske - Schmidtchen

(57) **Abstract**

Upon receiving a read command from an external device, a control element (101) in an IC card (1) determines whether transmission data to be stored in a transmission buffer area (103d) is the data that has been read out from a transfer permission area. When determining in the determination that the data is the data that has been read out from the transfer permission area, the control element (101) stores the data in the transmission buffer area (103d) and then outputs it to the outside as a response to the read command. On the other hand, when determining in the above determination that the data is not the data that has been read out from the transfer permission area, the control element (101) aborts the operation.

## Description

The present invention relates to a portable electronic apparatus such as an IC card having a data storage function and a communication function of communicating with an external device.

An IC card has a control element, a communication interface, a memory, and the like. The control element performs various processing according to a control program. The communication interface controls a communication with an external device. The memory stores various types of data. In the memory of the IC card, a control program, control data, unique information to the IC card, and data related to individual information of the owner of the IC card are stored. In the conventional IC card, the data stored in the memory is protected by the control program executed by the control element.

Recently, however, illegal attacks have been made against the IC card. In the illegal attacks, electrical noise is intentionally applied to the IC card to cause the control program thereof to malfunction. This may cause the IC card to improperly output the data stored in the memory.

An object of an aspect of the present invention is to provide a portable electronic apparatus capable of preventing data in the apparatus from being improperly output and thereby ensuring high security.

According to an aspect of the present invention, there is provided a portable electronic apparatus comprising: a memory that stores data; a communication section that performs data communication with an external device; a transmission buffer for storing the data to be transmitted to the external device through the communication section; and a control element that allows the data to be stored in the transmission buffer in the case where the storage area of the data is a transfer permission area in the memory, whereas prohibits the data from being stored in the transmission buffer in the case where the storage area of the data is not the transfer permission area.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration example of an IC card system including an IC card and terminal system serving as a portable electronic apparatus according to an embodiment of the present invention;
FIG. 2 is a block diagram schematically showing a configuration example of the IC card;
FIG. 3 is a view showing a configuration example of data stored in a working memory;
FIG. 4 is a view showing a configuration example of data stored in a program memory;
FIG. 5 is a flowchart for explaining first data readout processing in the IC card;
FIG. 6 is a flowchart for explaining second data readout processing in the IC card; and
FIG. 7 is a flowchart for explaining third data readout processing in the IC card.

An embodiment of the present invention will be described below with reference to the accompanying drawings.

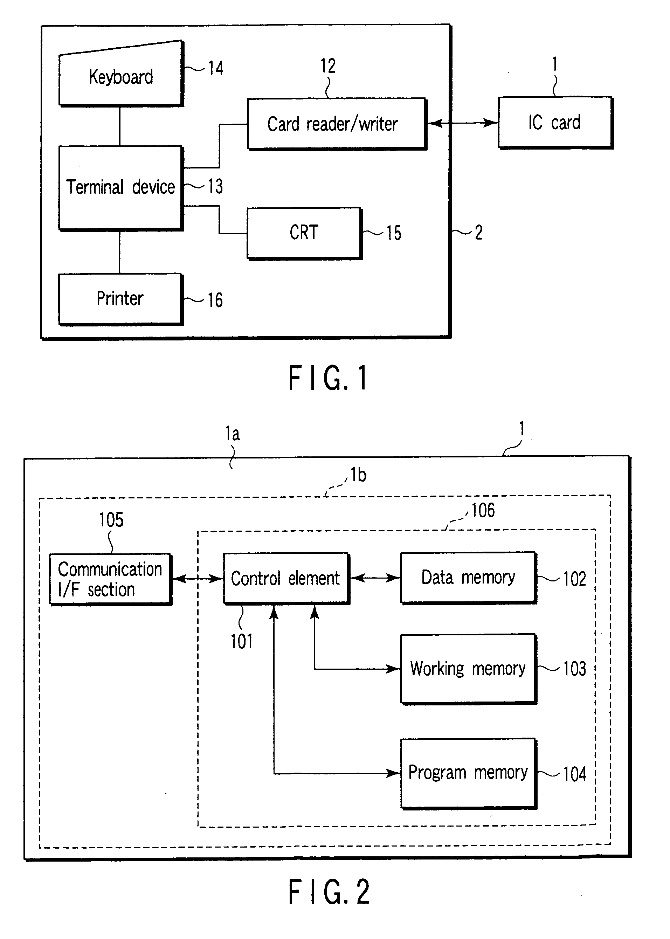

FIG. 1 is a view showing a configuration example of an IC card system according to the embodiment of the present invention.

As shown in FIG. 1, the IC card system includes an IC card 1 serving as a portable electronic apparatus and a terminal system (IC card processor) 2 serving as an external device. The IC card 1 and terminal system 2 are capable of performing data communication. In the IC card system, the IC card 1 performs processing in response to, for example, a command from the terminal system 2.

The terminal system 2 includes, as shown in FIG. 1, a card reader/writer 12, a terminal device 13, a keyboard 14, a display section 15, and a printer 16.

The card reader/writer 12 functions as an interface for communicating with the IC card 1. In the case where the IC card 1 is of a contact type, the card reader/writer 12 includes a contact section for physically contacting a contact portion of the IC card 1 and a communication controller for performing data exchange with the IC card 1 through the contact portion. In the case where the IC card 1 is of a non-contact type, the card reader/writer 12 includes an antenna for transmitting and receiving a radio wave and a communication controller for performing data exchange through the antenna by radio waves.

The terminal device 13 functions as a controller controlling the terminal system 2. The terminal device 13 is constituted by, for example, a computer such as a personal computer. The terminal device 13 uses the card reader/writer 12 to perform data communication with the IC card 1 and various processing according to the data received from the IC card 1.

The keyboard 14 functions as an operation section of the terminal system 2. An operator of the terminal system 2 inputs various operational instructions and data using the keyboard 14. The information input through the keyboard 14 is supplied to the terminal device 13. The display section 15 is a display unit that displays various information under the control of the terminal device 13. For example, an operation guide is displayed on the display section 15. The printer 16 performs printing in response to a request from the terminal device 13.

Next, a configuration of the IC card 1 will be described.

FIG. 2 is a view showing a configuration example of the IC card 1.

As shown in FIG. 2, the IC card 1 includes a control element 101, a data memory 102, a working memory 103, a program memory 104, and a communication interface (I/F) section 105.

The control element 101, data memory 102, working memory 103, and program memory 104 are constituted by, for example, one or more IC chips 106. The IC chip 106 and communication interface section 105 are integrally formed as an IC module 1b. The 1C module 1b is embedded in a card body 1a. That is, the IC card 1 is constituted by the card body 1a in which the IC module 1b is incorporated. It is only necessary for the card body 1a to incorporate the IC module 1b. For example, the shape of the card body 1a is not limited to a card-like shape, but may be a block-like shape or bar-like shape.

The control element 101 controls the entire operation of the IC card 1. The control element 101 serves as a controller. The control element 101 is constituted by, for example, a CPU.

The data memory 102 is constituted by a rewritable non-volatile storage element. The data memory 102 is constituted by, for example, a rewritable non-volatile memory such as an EEPROM and a flash ROM. The data memory 102 is used for storage of various data.

The working memory 103 is constituted by a rewritable storage element. For example, the working memory 103 is constituted by a random access memory (RAM). The working memory 103 functions as a working memory that temporarily retains data. For example, when the control element 101 performs some processing, processing data is temporarily stored in the working memory 103.

The program memory 104 is constituted by a non-volatile memory that cannot be changed by the user. The program memory 104 is constituted by, for example, a mask ROM. A control program or control data is stored in the program memory 104. For example, a control program executed by the control element 101, version information of the control program, or serial number (IC serial number) of the IC chip 106, and the like are stored in the program memory 104. The information stored in the program memory 104 is previously stored.

The communication interface section 105 is an interface for communicating with the terminal system 2. The communication interface section 105 has a configuration corresponding to the communication system of the IC card. In the case where the IC card 1 is of a contact type, the communication interface section 105 includes a contact section for electrically contacting the card reader/writer 12 of the terminal system 2. In the case where the IC card 1 is of a non-contact type, the communication interface section 105 includes an antenna for performing data communication with the card reader/writer 12 of the terminal system 2 through radio waves and a communication controller. It is assumed in this embodiment that the IC card 1 is a contact type IC card.

Data to be stored in the working memory 103 will next be described.

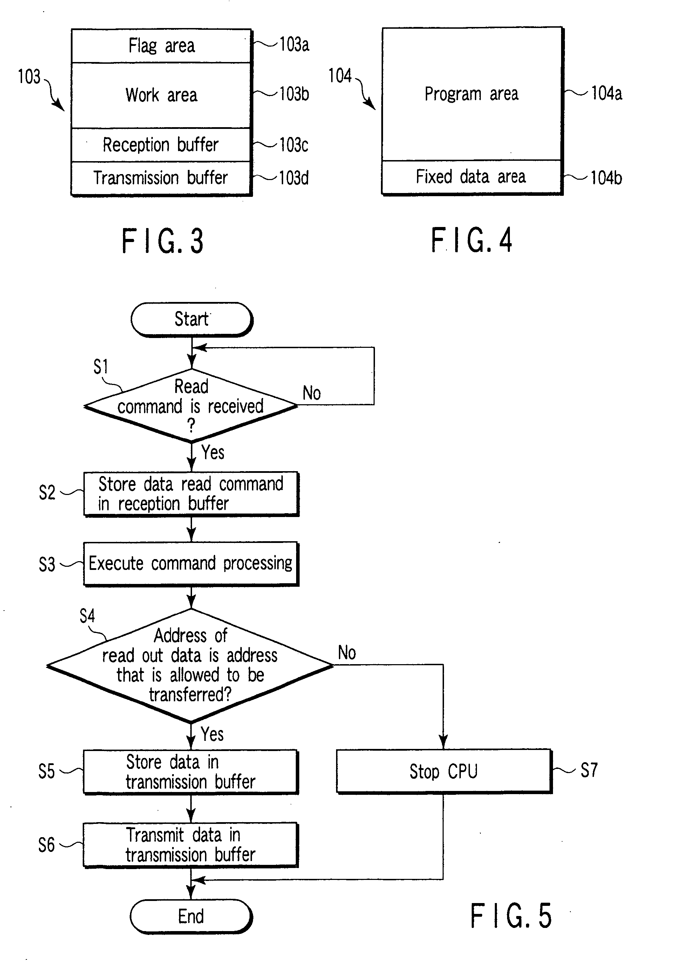

FIG. 3 is a view showing a configuration example of the storage area of the working memory 103.

As shown in FIG. 3, a plurality of areas for storing various data are prepared as the storage area of the working memory 103. In the example of FIG. 3, the working memory 103 includes a flag area 103a, a work area 103b, a reception buffer area 103c, and a transmission buffer area 103d.

The respective areas prepared as the storage area of the working memory 103 are managed by an address. Therefore, the control element 101 accesses the flag area 103a, work area 103b, reception buffer area 103c, or transmission buffer area 103d according an address control scheme.

The flag area 103a is an area for storing a flag representing a status. The flag stored in the flag are 103a is used for the control performed by the control element 101. For example, a transfer permission flag for the control element 101 to determine availability of data transfer is stored in the flag area 103a. Details of the transfer permission flag will be described later.

The work area 103b is an area for storing working data. The data used in computation performed by the control element 101 and the like is stored in the work area 103b.

The reception buffer area 103c functions as a reception buffer in the data communication between the IC card 1 and terminal system 2. That is, the data transmitted from the terminal system 2 is temporarily stored in the reception buffer area 103c.

The transmission buffer area 103d functions as a transmission buffer in the data communication between the IC card 1 and terminal system 2. That is', the data to be transmitted from the IC card 1 to the terminal system 2 is temporarily stored in the transmission buffer area 103d.

Data to be stored in the program memory 104 will next be described.

FIG. 4 is a view showing a configuration example of the storage area of the program memory 104.

As shown in FIG. 4, a plurality of areas for storing various data are prepared as the storage area of the program memory 104. In the example of FIG. 4, the program memory 104 includes a program area 104a and fixed data area 104b.

The respective areas prepared as the storage area of the program memory 104 are managed by an address. For example, the fixed data area 104b is specified by the top and bottom addresses. Therefore, the control element 101 accesses the program area 104a and fixed data area 104b according to an address control scheme. For example, in the case of reading out data from the fixed data area 104b, the control element 101 specifies an address in the range allocated as the fixed data area 104a to read out data.

The program area 104a is an area for storing a control program. The control program stored in the program area 104a is executed by the control element 101. In other words, the control element 101 executes the control program stored in the program area 104a to thereby realize various functions.

The fixed data area 104b is an area for storing data (fixed data) unique to the IC card 1. As the fixed data, version data of the control program stored in the program area 104a, serial number of the IC card 1, serial number of the IC chip embedded in the IC card 1 or the like is stored in the fixed data area 104b.

The basic processing performed in the IC card 1 will next be described.

The IC card 1 executes processing according to a command received from an external device in general. In the IC card system as shown in FIG. 1, the IC card 1 executes processing according to a command received from the terminal system 2. The result obtained by the processing performed according to a command received from the terminal system 2 is transmitted, as a response, from the IC card 1 to the terminal system 2.

The command includes data having a predetermined format. Therefore, the terminal system 2 creates a desired command based on the predetermined format. The IC card 1 interprets the command in the data that has been received, according to the predetermined format, from the terminal system 2.

Examples of the command issued from the terminal system 2 to the IC card 1 include a read command and a write command.

The read command is used for the terminal system 2 to request the IC card 1 to read out data. Upon receiving the read command, the IC card 1 reads out data stored in the data memory 102 or data stored in the fixed data area 104b of the program memory 104 and transmits the readout data to the terminal system 2.

The write command is used for the terminal system 2 to request the IC card 1 to write data. Upon receiving the write command, the IC card 1 writes data onto the data memory 102 and transmits the result to the terminal system 2.

The data read processing in a commonly-used IC card 1 performed for the read command will schematically be described.

In a commonly-used IC card, data read processing for the read command is performed according to the following steps (1) to (4):
(1) Upon receiving data transmitted from an external device, the IC card stores the received data in the reception buffer. In the case where data as a read command is transmitted from the external device, the IC card stores the data as the read command in the reception buffer.
(2) After storing the data transmitted from the external device in the reception buffer, the IC card identifies the command from the data stored in the reception buffer and executes a program corresponding to the identified command. In the case where data as a read command is stored in the reception buffer, the IC card identifies the data as the read command and executes a program corresponding to the read command. In the processing according to the program corresponding to the command, determination of the validity of the command or confirmation of access condition is executed.
(3) When executing the program corresponding to the received read command, the IC card reads out the data specified by the read command from the memory and stores it in the transmission buffer. In the read command, the data to be read out is specified by the memory address. That is, the IC card reads out data from the memory according to the address specified by the read command and stores the read out data in (transfers it to) the transmission buffer.
(4) After storing the data specified by the read command in the transmission buffer, the IC card transmits, as response data, the data stored in the transmission buffer to the external device which is the source of the read command.

In the above data read processing, if program malfunction occurs due to an illegal attack, there is a risk that the IC data stores the data that should not be output to the outside in (transfers it to) the transmission buffer and outputs the data stored in the transmission buffer to the outside.

First data read processing to be applied to the IC card 1 will next be described.

Firstly, the first data read processing will schematically be described.

In this first data read processing, a storage area (transfer permission area) that permits transfer to the transmission buffer area 103d is previously set in the IC card 1. The IC card 1 in which such a transfer permission area has been set determines whether the data to be stored in the transmission buffer area 103d is the data existing in the transfer permission area before storing the data in the transmission buffer area 103d. When determining in the determination that the data is data existing in the transfer permission area, the IC card 1 stores the data in the transmission buffer area 103d. On the other hand, when determining in the determination that the data is not data existing in the transfer permission area, the IC card 1 aborts the processing.

The transfer permission area is set by an address on the memory (program memory 104 or data memory 102). Therefore, the IC card 1 determines whether the data to be stored in the transmission buffer area 103d is data existing in the transfer permission area depending on whether the address on the memory of the data to be stored in the transmission buffer area 103d is an address corresponding to the transfer permission area.

For example, in the case where only the data in the fixed data area 104b is allowed to be output to the outside, the address corresponding to the fixed data area 104b in the program memory 104 is set as the transfer permission area. In this case, in the IC card 1, only the data in the fixed data area 104b is allowed to be stored in the transmission buffer area 103d; whereas, in the case of the data other than that in the fixed data area 104b, the IC card 1 determines that some illegal thing has been made and aborts the operation.

The procedure of the first data read processing will next be described.

FIG. 5 is a flowchart for explaining an example of the first data processing in the IC card 1.

Firstly, the terminal system 2 transmits data as a read command for requesting the 1C card 1 to read out the fixed data to the IC card 1. When the data as the read command is transmitted from the terminal system 2, the IC card 1 receives the data (data serving as read command) transmitted from the card reader/writer 12 of the terminal system 2 by the communication interface 105 (step S1). Upon receiving the data from the terminal system 2 by the communication interface 105, the control element 101 stores the data received by the communication interface 105 in the reception buffer area 103c (step S2).

After storing the data received from the terminal system 2 in the reception buffer area 103c, the control element 101 executes command processing based on the data stored in the reception buffer area 103c (step S3). In the command processing, the control element 101 identifies the command in the data stored in the reception buffer area 103c and executes processing according to a program corresponding to the identified command.

That is, in the command processing in step S3, the control element 101 identifies the read command in the data received from the terminal system 2. After determining that the received data is the read command, the control element 101 selects a program corresponding to the read command from programs stored in the program area 104a in the program memory 104. After selecting the program corresponding to the read command, the control element 101 executes the selected program. The control element 101 checks the validity of the command, access condition, and the like according to the selected program.

After checking the validity of the read command in the command processing, the control element 101 reads out data in the storage area specified by the read command as the transmission data. After reading out the data, the control element 101 determines whether the storage area from which the data has been read out is the transfer permission area whose data is allowed to be stored in the transmission buffer area 103d (step S4) .

That is, in the case where the storage area of the data to be read out according to the read command is specified by an address, the control element 101 reads out data corresponding to the address specified by the read command. After reading out the data, the control element 101 determines whether the read out address is the address (transfer permission address) corresponding to the transfer permission area whose data is allowed to be stored in (transferred to) the transmission buffer area 103d.

Here, it is assumed, in the IC card 1, that only the fixed data stored in the fixed data area 104b is allowed to be transferred. In this case, in the IC card 1, the address of the fixed data area 104b is set as the address (transfer permission address) of the transfer permission area whose data is allowed to be stored in (transferred to) the transmission buffer area 103d. When the address of the fixed data area 104b is set as the transfer permission address as described above, the control element 101 reads out the data of the address specified by the read command and, at the same time, determines whether the address of the data that has been read out is the address of the fixed data area 104b which is the transfer permission address.

When determining in the above determination that the address of the data that has been read out is the transfer permission address (YES in step S4), the control element 101 stores the data that has been read out in the transmission buffer area 103d as transmission data (step S5).

For example, in the case where the address of the fixed data area 104b is set as the transfer permission area in the IC card 1, when the address of the data that has been read out is the address of the fixed data area 104b, the control element 101 stores the data that has been read out from the fixed data area 104b in the transmission buffer area 103d.

After storing the data in the transmission buffer area 103d, the control element 101 transmits, as a response to the read command from the terminal system 2, the data stored in the transmission buffer area 103d to the terminal system 2 (step S6).

When determining in the above determination that the address of the data that has been read out is not the transfer permission address (NO in step S4), the control element 101 aborts the operation (step S7). For example, in the case where the address of the fixed data area 104b is set as the transfer permission area in the IC card 1, when the address of the data that has been read out is not the address of the fixed data area 104b, the control element 101 aborts the operation.

As a result, in the IC card 1, the data stored in the storage area other than the storage area (fixed data area 104b, for example) whose data is allowed to be stored in the transmission buffer area 103d is not stored in the transmission buffer area 103d. In other words, it is possible for the IC card 1 to prevent the data stored in the address other than the transfer permission address that has been previously set from being output to the outside.

As described above, in the first data read processing, the control element 101 determines whether the data to be stored in the transmission buffer area 103d is the data that has been read out from the transfer permission area. When determining in the determination that the data is the data that has been read out from the transmission permission area, the control element 101 stores the data in the transmission buffer area 103d and outputs it to the outside as a response to the read command. On the other hand, when determining in the determination that the data is not the data that has been read out from the transmission permission area, the control element 101 aborts the operation.

With the above configuration, in the first data read processing, it is possible to check whether the data to be stored in the transmission buffer area 103d is the data that has been read out from the transfer permission area. As a result, in the IC card 1 to which the first data read processing has been applied, if the address of the data to be read out is illegally changed due to program malfunction caused by illegal attack from the outside, it is possible to prevent the data in the storage area whose data is not allowed to be transferred from being output to the outside.

Second data read processing to be applied to the IC card 1 will next be described.

Firstly, the second data read processing will schematically be described.

In the second data read processing, operation control by the transfer permission flag set in the flag area 103a is added to the first data read processing.

That is, according to the second data read processing, the data can be stored in the transmission buffer area 103d only when the transfer permission flag indicates a transfer permission state. Further, in the second data read processing, it is determined whether the data (transmission data) to be stored in the transmission buffer area 103d is the data in the transmission permission area, as in the case of the first data read processing.

When it is determined by the determination that the data is the data in the transfer permission area, the IC card 1 updates the transfer permission flag in the transfer permission state indicating a state where the data is allowed to be transferred to the transmission buffer area 103d. Further, at the time when the storage of the data in the transmission buffer area 103d has been completed, the IC card 1 updates the transfer permission flag in a transfer prohibition state. Therefore, in the second data read processing, the transfer permission flag assumes the transfer permission state only between the time at which the transmission data has been determined as the data in the transfer permission area and the time at which the storage of the data in the transmission buffer area 103d has been completed.

That is, in the second data read processing, it is possible to store the data in the transmission buffer area 103d only in the case where the transmission data is reliably determined as the data in the transfer permission area. As a result, if the determination of whether the data is the data in the transfer permission area is skipped in the second data read processing, it is possible to prohibit the data from being stored in the transmission buffer area 103d by the transfer permission flag.

The procedure of the second data read processing will next be described.

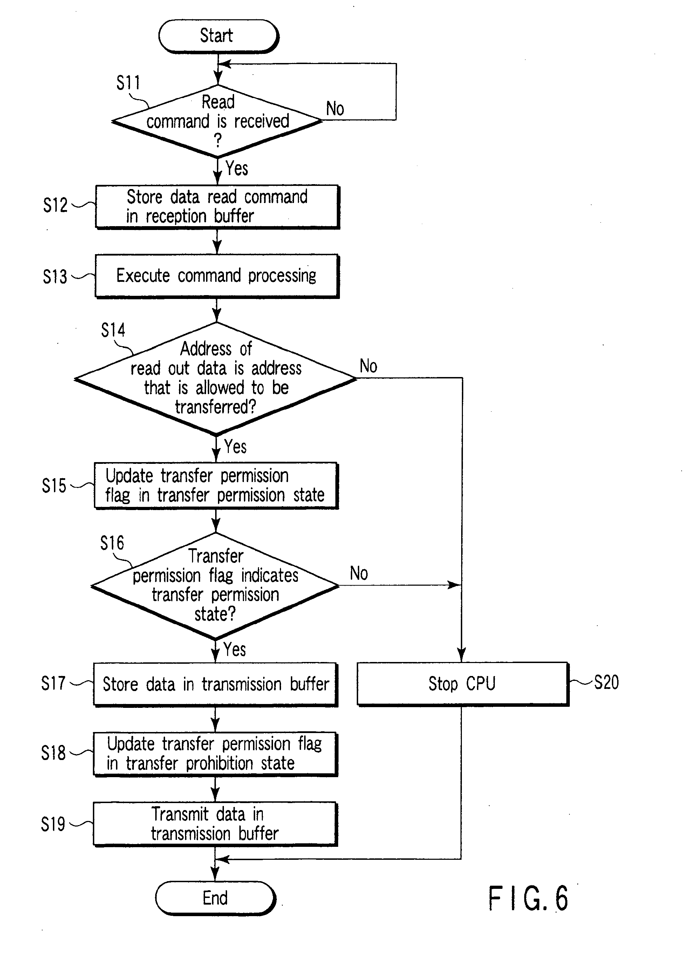

FIG. 6 is a flowchart for explaining an example of the second data read processing in the IC card 1.

Firstly, the terminal system 2 transmits data as a read command for requesting the IC card 1 to read out the fixed data to the IC card 1. When the data as the read command is transmitted from the terminal system 2, the IC card 1 receives the data (data serving as read command) transmitted from the card reader/writer 12 of the terminal system 2 by the communication interface 105 (step S11). Upon receiving the data from the terminal system 2 by the communication interface 105, the control element 101 stores the data received by the communication interface 105 in the reception buffer area 103c (step S12).

After storing the data received from the terminal system 2 in the reception buffer area 103c, the control element 101 executes command processing based on the data stored in the reception buffer area 103c (step S13). In the command processing, the control element 101 identifies the command in the data stored in the reception buffer area 103c and executes processing according to a program corresponding to the identified command .

That is, in the command processing in step S13, the control element 101 identifies the read command in the data received from the terminal system 2. After determining that the received data is the read command, the control element 101 selects a program corresponding to the read command from programs stored in the program area 104a in the program memory 104. After selecting the program corresponding to the read command, the control element 101 executes the selected program. The control element 101 checks the validity of the command, access condition, and the like according to the selected program.

After checking the validity of the read command in the command processing, the control element 101 reads out data in the storage area specified by the read command. After reading out the data, the control element 101 determines whether the storage area from which the data has been read out is the transfer permission area whose data is allowed to be stored in the transmission buffer area 103d (step S14).

That is, in the case where the storage area of the data to be read out according to the read command is specified by an address, the control element 101 reads out data corresponding to the address specified by the read command. After reading out the data, the control element 101 determines whether the read out address is the address (transfer permission address) corresponding to the transfer permission area whose data is allowed to be stored in (transferred to) the transmission buffer area 103d.

Here, it is assumed, in the IC card 1, that only the fixed data stored in the fixed data area 104b is allowed to be transferred. In this case, in the IC card 1, the address of the fixed data area 104b is set as the address (transfer permission address) of the transfer permission area whose data is allowed to be stored in (transferred to) the transmission buffer area 103d. When the address of the fixed data area 104b is set as the transfer permission address as described above, the control element 101 reads out the data of the address specified by the read command and, at the same time, determines whether the address of the data that has been read out is the address of the fixed data area 104b which is the transfer permission address.

When determining in the above determination that the address of the data that has been read out is the transfer permission address (YES in step S14), the control element 101 updates the transfer permission flag stored in the flag area 103a in the transfer permission state indicating a state where the data is allowed to be transferred to the transmission buffer area 103d (step S15).

Further, immediately before the data is stored in the transmission buffer area 103d or during the processing of storing the data in the transmission buffer area 103d, the control element 101 determines the state of the transfer permission flag stored in the flag area 103a (step S16).

When determining in the determination that the transfer permission flag indicates the transfer permission state (YES in step S16), the control element 101 stores the data (data that has been read out from, for example, fixed data area 104d) that has been read out in the transmission buffer area 103d (step S17).

After storing the data to be transmitted to the terminal system 2 in the transmission buffer area 103d, the control element 101 updates the transfer permission flag stored in the flag area 103a in a state indicating the transfer prohibition state (step S18).

After the update, the control element 101 transmits, as a response to the read command from the terminal system 2, the data stored in the transmission buffer area 103d to the terminal system 2 through the communication interface 105 (step S19).

When determining in the above determination that the address of the data that has been read out is not the transfer permission address (NO in step S14), the control element 101 aborts the operation (step S20). That is, when the address of the data that has been read out is not the address of the fixed data area 104b whose data is allowed to be stored in (transferred to) the transmission buffer area 103d, the control element 101 aborts the operation.

As a result, in the IC card 1, the data stored in the storage area other than the storage area (fixed data area 104b, for example) whose data is allowed to be stored in the transmission buffer area 103d can be prevented from being stored in the transmission buffer area 103d. In other words, it is possible to prevent the data stored in the address other than the transfer permission address that has been previously set from being output to the outside.

Further, in step S16, also in the case of determining that the transfer permission flag indicates the transfer prohibition state (NO in step S16), the control element 101 aborts the operation (step S20). That is, immediately before the data is stored in the transmission buffer area 103d, the control element 101 determines whether the IC card is in the transfer permission state based on the state of the transfer permission flag.

This prevents data transfer if the processing of step S14 is skipped due to illegal attack from the outside. Further, even if a program goes out of control and processing is unintentionally shifted from another processing step to the processing step of storing the data in the transmission buffer area 103d, it is possible to prevent the data from being stored in the transmission buffer area 103d and output to the outside.

That is, in the IC card 1, by referring to the transfer permission flag, it is possible to prevent the data from being stored in the transmission buffer area 103d when the processing of storing the data in the transmission buffer area 103d should not be executed. In other words, by referring to the transfer permission flag, it is possible to prohibit the data from being stored in the transmission buffer area 103d by processing procedures other than the right procedure (predetermined procedure).

As described above, in the second data read processing, the control element 101 determines whether the transmission data to be stored in the transmission buffer area 103d is the data that has been read out from the transfer permission area. Only when determining in the determination that the transmission data is the data that has been read out from the transmission permission area, the control element 101 updates the transfer permission flag stored in the flag area 103a in the transfer permission state. The transfer permission flag is updated in the transfer prohibition state at the time when the storage of the data in the transmission buffer area 103d has been completed. The control element 101 stores the data in the transmission buffer area 103d only when the transfer permission flag is in the transfer permission state. In the case where the storage of the data in the transmission buffer 103d is to be executed when the transfer permission flag indicates the transfer prohibition state, the control element 101 aborts the operation.

With the above configuration, in the second data read processing, it is possible to execute the processing of storing the data in the transmission buffer area 103d only when it is determined that the data to be stored in the transmission buffer area 103d is the data in the transfer permission area. As a result, in the second data read processing, if the data is to be illegally stored in the transmission buffer area 103d due to program malfunction caused by illegal attack from the outside or due to program runaway, the data is not stored in the transmission buffer area 103d. In other words, in the second data read processing, it is possible to prevent the data from being output to the outside in the case where the processing procedure is illegally changed due to program malfunction caused by illegal attack from the outside or due to program runaway.

Third data read processing to be applied to the IC card 1 will next be described.

Firstly, the third data read processing will schematically be described.

In the third data read processing, in the IC card 1, the storage area (transfer permission area) whose data is allowed to be transferred to the transmission buffer area 103d is set and, at the same time, the storage area to be used as the transmission buffer area 103d is set in advance. In this configuration, when reading out transmission data, the IC card 1 determines whether the data is the data in the transfer permission area. When determining in the determination that the data is the data in the transfer permission area, the IC card 1 further determines whether the area in which the data is to be stored is the transmission buffer area 103d.

When confirming that the data in the transfer permission area is stored in the transmission buffer area 103d by the above determinations, the control element 101 stores the data in the transmission buffer area 103d. On the other hand, when determining in the determination that the data is not the data in the transfer permission area, or that the area storing the transmission data is not the transmission buffer area 103d, the IC card 1 aborts the operation.

The transfer permission area and transmission buffer area 103d are set by an address on the memory (program memory 104 or data memory 102). Therefore, the IC card 1 determines whether the transmission data is the data in the transfer permission area depending on whether the address of the transmission data in the memory corresponds to the transfer permission address. Further, the IC card 1 determines whether the area in which the transmission data is to be stored is the transmission buffer area 103d depending on whether the address of the area in which the transmission data is to be stored corresponds to the address of the transmission buffer area 103d.

For example, in the case where only the data in the fixed data area 104b is allowed to be output to the outside through the transmission buffer area 103d of the work memory 103, the address corresponding to the fixed data area 104b in the program memory 104 is set as the transfer permission area, and the address indicating the transmission buffer area 103d in the work memory 103 is set. In this case, in the IC card 1, it is possible to output the data to the outside only when it is determined that the data in the fixed data area 104b is stored in the transmission buffer area 103d.

The procedure of the third data read processing will next be described.

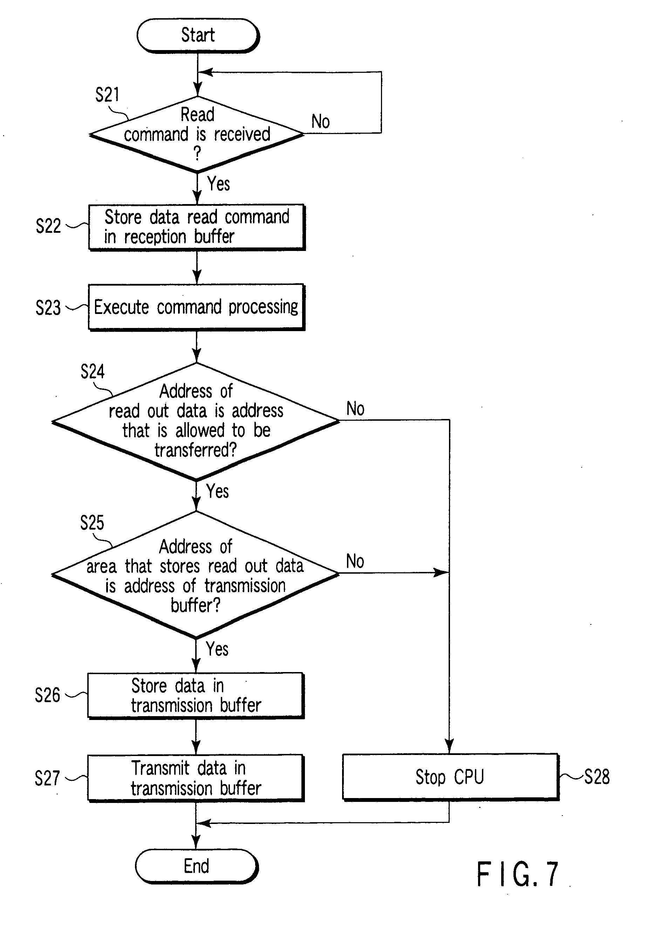

FIG. 7 is a flowchart for explaining an example of the third data processing in the IC card 1.

Firstly, the terminal system 2 transmits data as a read command for requesting the IC card 1 to read out the fixed data to the IC card 1. When the data as the read command is transmitted from the terminal system 2, the IC card 1 receives the data (data serving as read command) transmitted from the card reader/writer 12 of the terminal system 2 by the communication interface 105 (step S21). Upon receiving the data from the terminal system 2 by the communication interface 105, the control element 101 stores the data received by the communication interface 105 in the reception buffer area 103c (step S22).

After storing the data received from the terminal system 2 in the reception buffer area 103c, the control element 101 executes command processing based on the data stored in the reception buffer area 103c (step S23). In the command processing, the control element 101 identifies the command in the data stored in the reception buffer area 103c and executes processing according to a program corresponding to the identified command.

That is, in the command processing in step S23, the control element 101 identifies the read command in the data received from the terminal system 2. After determining that the received data is the read command, the control element 101 selects a program corresponding to the read command from programs stored in the program area 104a in the program memory 104. After selecting the program corresponding to the read command, the control element 101 executes the selected program. The control element 101 checks the validity of the command, access condition, and the like according to the selected program.

After checking the validity of the read command in the command processing, the control element 101 reads out data in the storage area specified by the read command. After reading out the data, the control element 101 determines whether the storage area from which the data has been read out is the transfer permission area whose data is allowed to be stored in the transmission buffer area 103d (step S24).

That is, in the case where the storage area of the data to be read out according to the read command is specified by an address, the control element 101 reads out, as transmission data, data corresponding to the address specified by the read command. After reading out the transmission data, the control element 101 determines whether the read out address is the address (transfer permission address) corresponding to the transfer permission area whose data is allowed to be stored in (transferred to) the transmission buffer area 103d.

Here, it is assumed, in the IC card 1, that only the fixed data stored in the fixed data area 104b is allowed to be transferred. In this case, in the IC card 1, the address of the fixed data area 104b is set as the address (transfer permission address) of the transfer permission area whose data is allowed to be stored in (transferred to) the transmission buffer area 103d. When the address of the fixed data area 104b is set as the transfer permission address as described above, the control element 101 reads out the data of the address specified by the read command and, at the same time, determines whether the address of the data that has been read out is the address of the fixed data area 104b which is the transfer permission address.

When determining in the above determination that the address of the transmission data that has been read out is the transfer permission address (YES in step S24), the control element 101 further determines whether the area in which the transmission data is to be stored is the transmission buffer area 103d (step S25). That is, the control element 101 determines whether the address on the memory storing the transmission data corresponds to the address of the transmission buffer area 103d.

When determining in the above determination that the address of the area in which the transmission data is to be stored is the address of the transmission buffer area 103d (YES in step S25), the control element 101 stores the transmission data in the transmission buffer area 103d (step S26).

For example, in the case where the address of the fixed data area 104b is set as the transfer permission area in the IC card 1, when the address of the data that has been read out is the address of the fixed data area 104b and the address of the area in which the data is to be stored is the address of the transmission buffer area 103d, the control element 101 stores the data that has been read out from the fixed data area 104b in the transmission buffer area 103d.

After storing the transmission data in the transmission buffer area 103d, the control element 101 transmits, as a response to the read command from the terminal system 2, the data stored in the transmission buffer area 103d to the terminal system 2 (step S27).

When determining in the above determination that the address of the transmission data that has been read out is not the transfer permission address (NO in step S24), the control element 101 aborts the operation (step S28). For example, in the case where the address of the fixed data area 104b is set as the transfer permission area in the IC card 1, when the address of the transmission data that has been read out is not the address of the fixed data area 104b, the control element 101 aborts the operation.

Further, when determining in the above determination that the address of the area in which the transmission data is to be stored is not the address of the transmission buffer area 103d (NO in step S25), the control element 101 aborts the operation (step S28).

As a result, in the IC card 1, the data stored in the storage area other than the transfer permission area (fixed data area 104b, for example) is not stored in the transmission buffer area 103d and the data stored in the transfer permission area is not stored in the storage area other than the transmission buffer area 103d. In other words, it is possible to prevent the data stored in the address other than the transfer permission address that has been previously set from being output to the outside. Further, it is possible to prevent the data stored in the transfer permission address from being stored in the storage area other than the transmission buffer area 103d.

As described above, in the third data read processing, the control element 101 determines whether the data to be stored in the transmission buffer area 103d is the data that has been read out from the transfer permission area. When determining in the determination that the data is the data that has been read out from the transmission permission area, the control element 101 further determines whether the area in which the transmission data is to be stored is the transmission buffer area 103d. When confirming in the above determinations that the data in the transfer permission area is stored in the transmission buffer area 103d, the control element 101 stores the data in the transmission buffer area 103d and then transmits the data as a response to the read command to the outside. When determining in the above determinations that the data is not the data that has been read out from the transmission permission area, or that the storage area in which the data is to be stored is not the transmission buffer area 103d, the control element 101 aborts the operation.

With the above configuration, in the third data read processing, it is possible to check whether the data that has been read out from the transfer permission area is stored in the transmission buffer area 103d. As a result, in the third data read processing, it is possible to prevent the data in the storage area whose data is not allowed to be transferred from being output to the outside or prevent the transmission data from being stored in the storage area other than the transmission buffer area 103d even in the case where the address of the transmission data to be read out or the address of the storage area in which the transmission data is to be stored is illegally changed due to program malfunction caused by illegal attack from the outside.

The first, second, and third data read processing, which have been described in the above embodiment are also applicable to data read processing of outputting the data in the data memory 102 to the outside. That is, the above first, second, and third data read processing can be carried out as data read processing to a read command for requesting the readout of the data stored in the data memory 102. This processing can be realized by setting the transfer permission area on the data memory 102 by an address on the data memory 102.

For example, it is possible to divide the storage area of the data memory 102 into two areas, with one area set as the transfer enable area and the other set as the transfer prohibition area. In this case, in the IC card 1, the data in the area that has been set as the transfer enable area of the data memory 102 is allowed to be stored in (transferred to) the transmission buffer, and the data in the other area of the data memory 102 is prohibited from being stored in (transferred to) the transmission buffer.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A portable electronic apparatus (1) **characterized by** comprising:
a memory (102, 104) that stores data;
a communication section (105) that performs data communication with an external device (2);
a transmission buffer (103d) for storing the data to be transmitted to the external device through the communication section (105); and
a control element (101) that stores data in the transmission buffer (103d) in the case where the storage area in which the data to be stored in the transmission buffer (103d) has been stored is a transfer permission area in the memory (102, 104); whereas prohibits data from being stored in the transmission buffer (103d) in the case where the storage area in which the data to be stored in the transmission buffer (103d) has been stored is not the transfer permission area.

2. The portable electronic apparatus (1) according to claim 1, **characterized in that**
the control element (101) determines whether the address of the data to be stored in the transmission buffer (103d) which has been stored on the memory (102, 104) corresponds to the address of a predetermined transfer permission area,
the control element storing the data in the transmission buffer when determining in the determination that the address of the data to be stored in the transmission buffer (103d) which has been stored on the memory (102, 104) corresponds to the address of a predetermined transfer permission area, and aborting the operation when determining in the determination that the address of the data to be stored in the transmission buffer (103d) which has been stored on the memory (102, 104) does not correspond to the address of the transfer permission area.

3. The portable electronic apparatus (1) according to claim 2, **characterized in that**
the memory (104) is a memory having a fixed data area (104b) that stores fixed data related to the portable electronic apparatus, and
the control element (101) determines whether the address of the data to be stored in the transmission buffer (103d) which has been stored on the memory (104) corresponds to the address of the fixed data area (104b) as the transfer permission area.

4. The portable electronic apparatus (1) according to claim 1, **characterized by** further comprising:
an identification information area (103a) that stores identification information indicating a permission state in which the data is allowed to be stored in the transmission buffer (103d) or a prohibition state in which the data is prevented from being stored in the transmission buffer (103d), wherein
the control element updates the identification information stored in the identification information area (103a) in the permission state in the case where the storage area of the data to be stored in the transmission buffer (103a) is the transfer permission area in the memory (102, 104), and stores the data in the transmission buffer (103d) only when the identification information stored in the identification information area (103a) indicates the permission state; whereas aborts the operation in the case where the identification information stored in the identification information area (103a) indicates the prohibition state.

5. The portable electronic apparatus (1) according to claim 4, **characterized in that**
the control element (101) determines whether the address of the data to be stored in the transmission buffer (103d) which has been stored on the memory (102, 104) corresponds to the address of a predetermined transfer permission area, updates the identification information stored in the identification information area (103a) in the permission state in the case where the address of the data to be stored in the transmission buffer (103d) which has been stored in the memory (102, 104) corresponds to the address of the transfer permission area, stores the data in the transmission buffer (103d) only when the identification information stored in the identification information area (103a) indicates the permission state, and updates the identification information in the prohibition state at the time when the storage of the data in the transmission buffer (103d) has been completed; whereas aborts the operation in the case where the identification information stored in the identification information area (103a) indicates the prohibition state.

6. The portable electronic apparatus (1) according to claim 5, **characterized in that**
the memory (104) is a memory having a fixed data area (104b) that stores fixed data related to the portable electronic apparatus, and
the control element (101) determines whether the address of the data to be stored in the transmission buffer (103d) which has been stored on the memory (104) corresponds to the address of the fixed data area (104b) as the transfer permission area.

7. The portable electronic apparatus (1) according to claim 1, **characterized in that**
the control element (101) stores transmission data in the transmission buffer (103d) in the case where the storage area in which the transmission data to be stored in the transmission buffer (103d) has been stored is the transfer permission area in the memory (102, 104), and where the storage area that stores the transmission data is the transmission buffer; whereas prohibits the data from being stored in the transmission buffer (103d) in the case where the storage area in which the transmission data has been stored is not the transfer permission area in the memory (102, 104), or where the storage area that stores the transmission data is not the transmission buffer (103d).

8. The portable electronic apparatus (1) according to claim 7, **characterized in that**
the control element (101) determines whether the address of the transmission data which has been stored in the memory (102, 104) corresponds to the address of a predetermined transfer permission area and whether the address of the storage area that stores the transmission data corresponds to the address of the transmission buffer (103d), stores the transmission data in the transmission buffer (103d) when determining that the address of the transmission data which has been stored in the memory (102, 104) corresponds to the address of the transfer permission area and the address of the storage area that stores the transmission data corresponds to the address of the transmission buffer (103d); whereas aborts the operation when determining that the address of the transmission data which has been stored in the memory (102, 104) does not correspond to the address of the transfer permission area or that the address of the storage area that stores the transmission data does not correspond to the address of the transmission buffer (103d).

9. The portable electronic apparatus (1) according to claim 8, **characterized in that**
the memory (104) is a memory having a fixed data area (104b) that stores fixed data related to the portable electronic apparatus, and
the control element (101) determines whether the address of the transmission data to be stored in the transmission buffer (103d) which has been stored on the memory (104) corresponds to the address of the fixed data area (104b) as the transfer permission area and whether the address of the storage area that stores the transmission data corresponds to the address of the transmission buffer (103d).
